(19) Europäisches Patentamt / European Patent Office / Office européen des brevets

(11) **EP 3 780 373 A1**

(12) **EUROPEAN PATENT APPLICATION**
published in accordance with Art. 153(4) EPC

(43) Date of publication:
**17.02.2021 Bulletin 2021/07**

(21) Application number: **18912399.5**

(22) Date of filing: **28.03.2018**

(51) Int Cl.:
**H02M 7/48** (2007.01)          **H02M 7/12** (2006.01)
**H02M 7/49** (2007.01)

(86) International application number:
**PCT/JP2018/012705**

(87) International publication number:
**WO 2019/186752 (03.10.2019 Gazette 2019/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **TOSHIBA MITSUBISHI-ELECTRIC INDUSTRIAL SYSTEMS CORPORATION**
**Chuo-ku**
**Tokyo 104-0031 (JP)**

(72) Inventors:
• **URABE, Hiroyuki**
  **Tokyo 104-0031 (JP)**
• **USUKI, Kazuhiro**
  **Tokyo 104-0031 (JP)**

(74) Representative: **Winter, Brandl, Fürniss, Hübner, Röss, Kaiser, Polte - Partnerschaft mbB**
**Patent- und Rechtsanwaltskanzlei**
**Alois-Steinecker-Straße 22**
**85354 Freising (DE)**

(54) **POWER CONVERSION DEVICE**

(57)    An embodiment provides a power conversion device equipped with a power converter and a control device. The power converter is an MMC. The power converter includes six arms, each of which includes unit converters connected in cascade. The power converter includes one current detector for each arm. The current detectors detect the respective currents flowing through the arms provided therewith. The control device includes an abnormality detection unit for detecting, on the basis of the detected currents, that there is an abnormality in any of the six current detectors.

FIG. 1

**Description**

Technical Field

An embodiment of the invention relates to a power conversion device.

Background Art

MMCs (Modular Multilevel Converters) are being put into practical use. In a MMC, other than an alternating current output to an alternating current system, it is necessary to control a circulating current flowing through the power converter. The alternating current and/or the circulating current is calculated using the arm currents flowing in the arms. Therefore, current detectors that detect the arm currents are provided in the arms of the power converter.

The alternating current and/or the circulating current is not controlled appropriately when an abnormality such as a failure, etc., in which an overcurrent cannot be detected occurs in one of the current detectors provided in the arms. Because the alternating current and/or the circulating current is not controlled appropriately, there is a risk that a capacitor voltage of a unit converter may become an abnormal voltage, and the power conversion device may be damaged, etc.

Citation List

Patent Literature

Patent Literature 1: JP-A 2001-157460 (Kokai)

Summary of Invention

Problem to be Solved by the Invention

An embodiment of the invention provides a power conversion device that can operate safely even when an abnormality occurs in a current detector in an arm.

Means for Solving the Problem

According to an embodiment of the invention, a power conversion device that includes a power converter and a control device is provided. The power converter includes first to fifth connection parts. The first connection part can be connected to the high potential side of a direct current circuit. The second connection part can be connected to the low potential side of the direct current circuit. The third to fifth connection parts can be connected respectively to first to third phases of an alternating current circuit. The power converter includes first to sixth arms. The first to sixth arms each include a unit converter having a cascade connection. The first arm is connected between the first connection part and the third connection part. The second arm is connected between the third connection part and the second connection part. The third arm is connected between the first connection part and the fourth connection part. The fourth arm is connected between the fourth connection part and the second connection part. The fifth arm is connected between the first connection part and the fifth connection part. The sixth arm is connected between the fifth connection part and the second connection part. The power converter includes first to sixth current detectors. The first to sixth current detectors are single current detectors. The first to sixth current detectors are provided respectively in the first to sixth arms. The first to sixth current detectors respectively detect first to sixth currents flowing in the arms in which the first to sixth current detectors are provided. The control device includes an abnormality detecting part that detects an existence of an abnormality in one of the first to sixth current detectors based on the first to sixth currents.

Effects of the Invention

According to an embodiment of the invention, a power conversion device that can operate safely even when an abnormality occurs in a current detector can be provided.

Brief Description of Drawings

[FIG. 1]

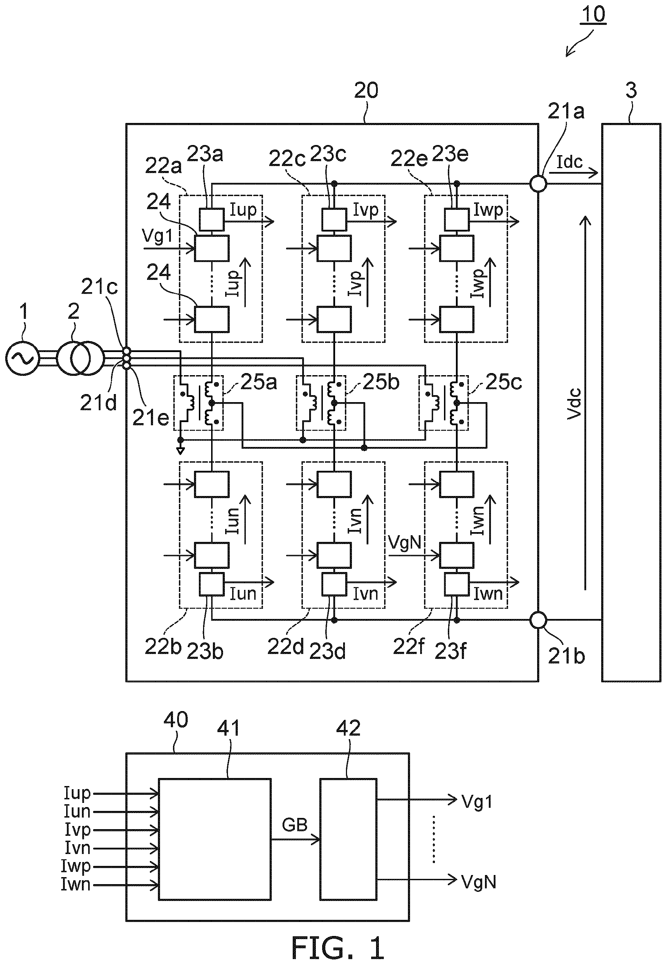

FIG. 1 is a block diagram illustrating a power conversion device according to a first embodiment.
[FIG. 2]

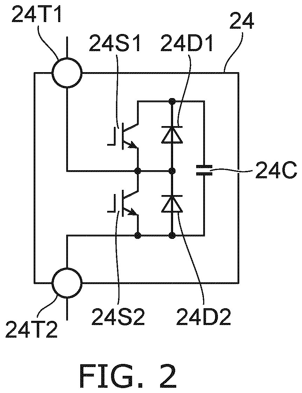

FIG. 2 is a block diagram illustrating a portion of the power conversion device of the first embodiment.
[FIG. 3]

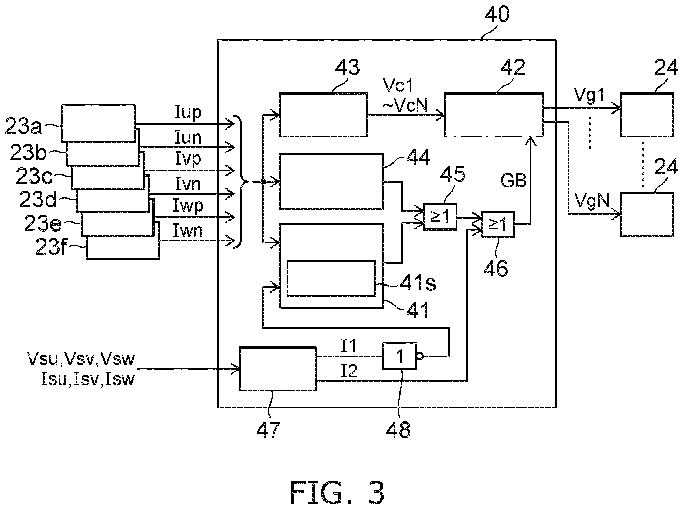

FIG. 3 is a block diagram illustrating a portion of the power conversion device of the first embodiment.
[FIG. 4]

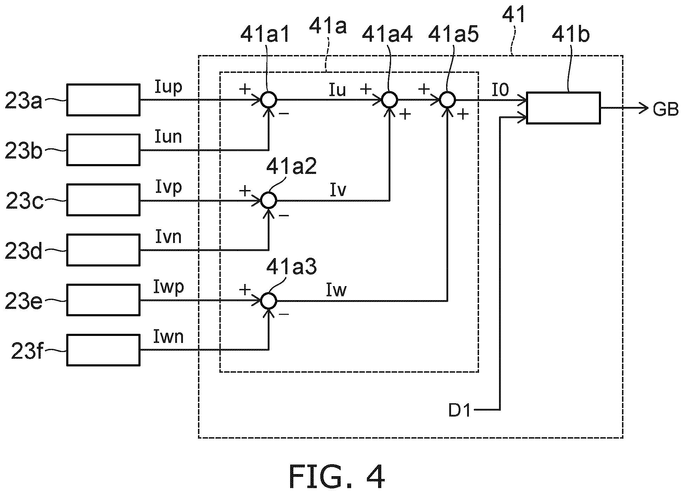

FIG. 4 is a block diagram illustrating a portion of the power conversion device of the first embodiment.
[FIG. 5]

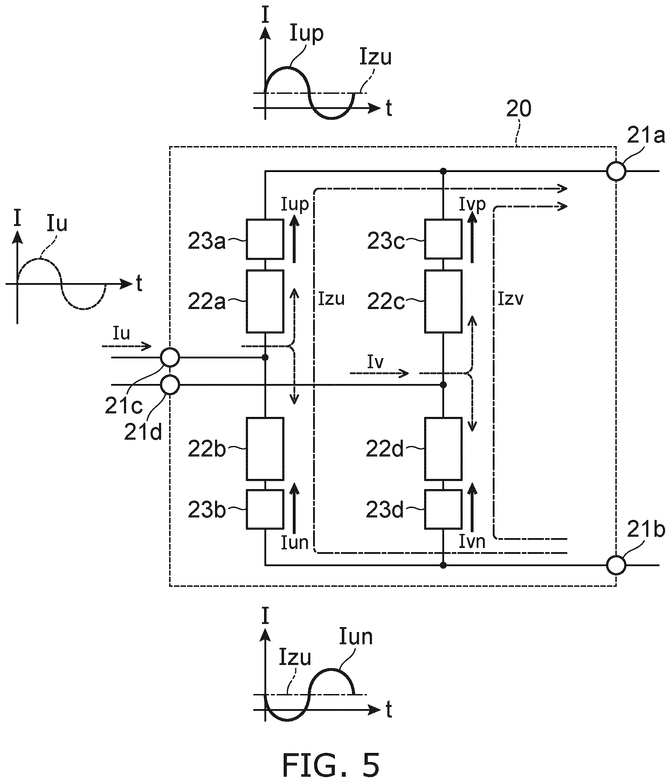

FIG. 5 is a schematic view for describing the currents flowing in the power converter.
[FIG. 6]

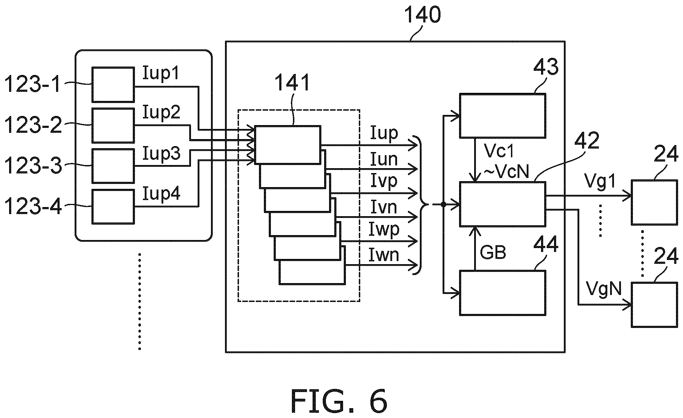

FIG. 6 is a block diagram illustrating a power conversion device of a comparative example.
[FIG. 7]

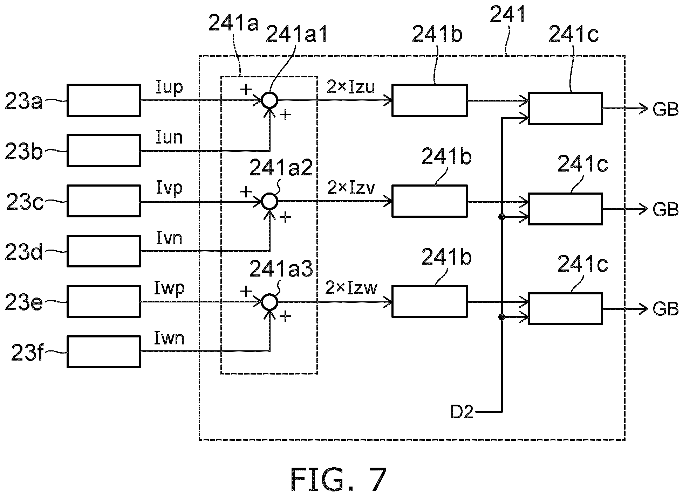

FIG. 7 is a block diagram illustrating a portion of a power conversion device according to a second embodiment.
[FIG. 8]

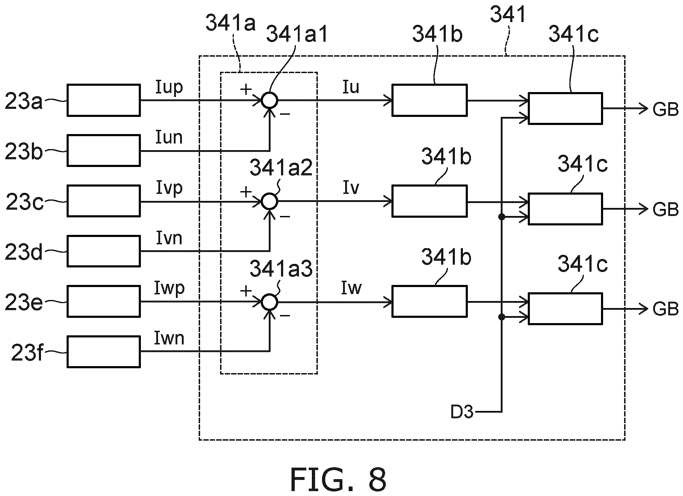

FIG. 8 is a block diagram illustrating a portion of a power conversion device according to a third embodiment.
[FIG. 9]

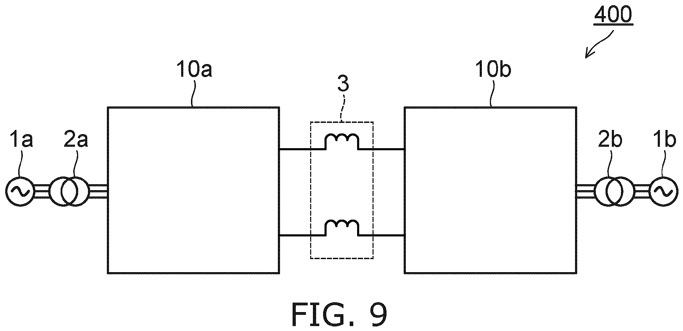

FIG. 9 is a block diagram illustrating a direct current power transmission system according to a fourth embodiment.

Description of Embodiments

Various embodiments are described below with reference to the accompanying drawings.
The drawings are schematic and conceptual, and the relationships between the thicknesses and widths of portions, the proportions of sizes among portions, etc., are not necessarily the same as the actual values. Furthermore, the dimensions and/or the proportions may be illustrated differently among drawings even in the case where the same portion is illustrated.
In the specification and drawings, components similar to those described previously or illustrated in an antecedent drawing are marked with the same reference numerals, and a detailed description is omitted as appropriate.

(First embodiment)

FIG. 1 is a block diagram illustrating a power conversion device according to the embodiment.
As shown in FIG. 1, the power conversion device 10 includes a power converter 20 and a control device 40. The power conversion device 10 is connectable to a direct current circuit 3 via connection parts 21a and 21b. The direct current circuit 3 includes, for example, a direct current power supply, a direct current power line, etc. The power conversion device 10 is connectable to an alternating current circuit 1 via connection parts 21c, 21d, and 21e (21c to 21e). As in this example, the power conversion device 10 may be connected to the alternating current circuit 1 via a transformer 2. The transformer 2 is, for example, a receiving transformer. The alternating current circuit 1 can include, for example, an alternating current power supply, an alternating current power line, an alternating current load, etc.
The connection part refers to a member or a part for connecting the power converter 20 and/or a unit converter 24 to an external circuit. In other words, the connection part includes wiring such as a terminal, a bus bar, etc., electrically connecting the power converter 20 and/or the unit converter 24 by screwing, welding, soldering, etc.
The power conversion device 10 converts the alternating current voltage of the alternating current circuit 1 into a direct current voltage Vdc and supplies a direct current Idc corresponding to the direct current circuit 3. The power conversion device 10 converts the direct current voltage Vdc of the direct current circuit 3 into an alternating current voltage and supplies the alternating current voltage to the alternating current circuit 1. The power conversion device 10 is not limited to power conversion in one direction from alternating current to direct current or from direct current to alternating current, and performs power conversion in two directions.
The power converter 20 is, for example, a MMC. The power converter 20 includes arms 22a, 22b, 22c, 22d, 22e, and 22f (22a to 22f). The arms 22a and 22b are connected in series via the secondary winding and the tertiary winding of a three-winding transformer 25a. The arm 22a is connected between the connection parts 21a and 21c, and the arm 22b is connected between the connection parts 21c and 21b. The arms 22c and 22d are connected in series via the secondary winding and the tertiary winding of a three-winding transformer 25b. The arm 22c is connected between the connection parts 21a and 21d, and the arm 22d is connected between the connection parts 21d and 21b. The arms 22e and 22f are connected in series via the secondary winding and the tertiary winding of a three-winding transformer 25c. The arm 22e is connected between the connection parts 21a and 21e, and the arm 22f is connected between the connection parts 21e and 21b. The primary windings of the three-winding transformers 25a to 25c are connectable respectively to the alternating current circuit 1 via the connection parts 21a to 21c.
Hereinbelow, an arm of the high potential side of the direct current circuit 3 may be called an arm of the upper side, and an arm of the low potential side of the direct current circuit 3 may be called an arm of the lower side.

The secondary winding and the tertiary winding in the three-winding transformers 25a to 25c are wound onto the same iron core and connected to each other to have subtractive polarity. The direct current magnetomotive forces due to the direct current flowing in the secondary winding and the tertiary winding have reverse polarities. Therefore, a short circuit current that flows between the upper and lower arms can be suppressed effectively. Instead of the three-winding transformers 25a to 25c, buffer reactors may be connected in series to the arms.

The series circuit that includes the arms 22a and 22b and the three-winding transformer 25a, the series circuit that includes the arms 22c and 22d and the three-winding transformer 25b, and the series circuit that includes the arms 22e and 22f and the three-winding transformer 25c are connected in parallel. This parallel circuit is connected between the connection parts 21a and 21b. That is, this parallel circuit is connected in parallel to the direct current circuit 3.

The arm 22a includes a current detector 23a and multiple unit converters 24. The multiple unit converters 24 are connected in series. The current detector 23a is provided to detect the current flowing in the unit converters 24. The current detector 23a is, for example, a current detector using a Hall element. The current detector 23a is not limited to a Hall element-type current detector; a current transformer may be used. Similarly, the other arms 22b to 22f respectively include current detectors 23b to 23f and the multiple unit converters 24.

The current detectors 23a to 23f detect arm currents Iup, Iun, Ivp, Ivn, Iwp, and Iwn (Iup to Iwn) flowing in the arms 22a to 22f and output the data of the arm currents. The data of the arm currents Iup to Iwn is input to the control device 40.

FIG. 2 is a block diagram illustrating a portion of the power conversion device.

As shown in FIG. 2, the unit converter 24 includes switching elements 24S1 and 24S2, diodes 24D1 and 24D2, and a capacitor 24C. The switching elements 24S1 and 24S2 are connected in series. The diodes 24D1 and 24D2 are connected in anti-parallel respectively to the switching elements 24S1 and 24S2. The capacitor 24C is connected in parallel to the series circuit of the switching elements 24S1 and 24S2.

The unit converter 24 controls the voltage across the capacitor 24C by charging and discharging the capacitor 24C by controlling ON and OFF of the switching elements 24S1 and 24S2.

The unit converter 24 includes connection parts 24T1 and 24T2. The unit converter 24 has a cascade connection to another unit converter 24 via the connection parts 24T1 and 24T2.

The switching elements 24S1 and 24S2 are driven by gate signals Vg1 to Vg$N$ input from the control device 40. $N$ is $2 \times 6 \times M$, and $M$ is the number of the unit converters 24 having a cascade connection in each arm.

The unit converter is not limited to a half-bridge configuration such as that described above and may have a full-bridge configuration.

The description is continued by returning to FIG. 1.

The control device 40 includes an abnormality detecting part 41 and a gate signal generator 42. The data of the arm currents Iup to Iwn detected by the current detectors 23a to 23f is input to the abnormality detecting part 41. Based on the data of the current values Iup to Iwn of the arms, the abnormality detecting part 41 detects an abnormality of one of the current detectors 23a to 23f and generates a gate-block signal GB. The abnormality detecting part 41 is not limited to generating the gate-block signal GB by itself; for example, the gate-block signal GB may be generated by inputting a gate-block generation signal to a not-illustrated gate-block signal generation circuit that sets functions for when a failure is detected.

When the gate-block signal GB is input from the abnormality detecting part 41 to the gate signal generator 42, the gate signal generator 42 maintains all of the gate signals Vg1 to Vg$N$ in the OFF-state. Because all of the gate signals Vg1 to Vg$N$ are in the OFF-state, the unit converters 24 stop operating. Accordingly, the power conversion device 10 is set to an operation stop state.

FIG. 3 and FIG. 4 are block diagrams illustrating portions of the power conversion device.

As shown in FIG. 3, the control device 40 further includes a controller 43, an arm overcurrent determiner 44, and an OR circuit 45.

The voltages across the capacitors 24C (the capacitor voltages; not-illustrated) of the unit converters 24, the arm currents Iup to Iwn, etc., are input to the controller 43, and the controller 43 controls the average value of the capacitor voltages of all of the unit converters 24 to track a command value. Also, the controller 43 includes a circuit for balance control of the capacitor voltages. The balance control circuit balances the average values of the capacitor voltages of the phases, balances the average values of the capacitor voltages between the upper and lower arms, and balances the capacitor voltages in the arms. The controller 43 generates voltage command values Vc1 to Vc$N$ for balancing the capacitor voltages in the arms, and inputs the voltage command values Vc1 to Vc$N$ to the gate signal generator 42.

The currents of the arms are input to the arm overcurrent determiner 44. The arm overcurrent determiner 44 compares the arm currents Iup to Iwn to a threshold for a preset overcurrent. When the values of the arm currents Iup to Iwn are not less than the threshold, the arm overcurrent determiner 44 determines that overcurrents flow in the current detectors, and generates the gate-block signal GB.

The OR circuit 45 is connected to the outputs of the arm overcurrent determiner 44 and the abnormality detecting part 41. When at least one of the arm overcurrent determiner 44 or the abnormality detecting part 41 outputs the gate-block signal GB, the OR circuit 45 inputs the gate-block signal GB to the gate signal generator 42 via an OR circuit 46.

As in the example, the abnormality detecting part 41 may include a failure location determiner 41s. When an abnormality is detected in one of the current detectors by the abnormality detecting part 41, the failure location determiner 41s extracts the direct current components or the alternating current components of the phases from the arm currents and identifies the current detector in which the abnormality occurred by performing a determination for the direct current components or the alternating current components. The control device 40 rapidly identifies the failure location; thereby, it is possible to reduce the time from the failure to the restoration, and the maintainability of the power converter 20 can be improved.

As shown in FIG. 4, the abnormality detecting part 41 includes a calculator 41a and a determiner 41b. The data of the arm currents Iup to Iwn is input to the calculator 41a, and the calculator 41a calculates data of a zero-phase current 10 of alternating currents Iu to Iw. In the example, the calculator 41a includes three adder-subtracters 41a1 to 41a3 and two adders 41a4 and 41a5.

The arm current Iup that flows through the arm 22a of the upper side of the U-phase is detected by the current detector 23a. The arm current Iun that flows through the arm 22b of the lower side of the U-phase is detected by the current detector 23b. The difference between the arm currents Iup and Iun is calculated by the adder-subtracter 41a1. The adder-subtracter 41a1 outputs the data of an alternating current Iu of the U-phase.

The arm current Ivp that flows through the arm 22c of the upper side of the V-phase is detected by the current detector 23c. The arm current Ivn that flows through the arm 22d of the lower side of the V-phase is detected by the current detector 23d. The difference between the arm currents Ivp and Ivn is calculated by an adder-subtracter 41a2. The adder-subtracter 41a2 outputs the data of an alternating current Iv of the V-phase.

The arm current Iwp that flows through the arm 22e of the upper side of the W-phase is detected by the current detector 23e. The arm current Iwn that flows through the arm 22f of the lower side of the W-phase is detected by the current detector 23f. The difference between the arm currents Iwp and Iwn is calculated by the adder-subtracter 41a3. The adder-subtracter 41a3 outputs the data of an alternating current Iw of the W-phase.

The zero-phase current 10 is calculated by the adders 41a4 and 41a5 adding the data of the alternating currents Iu, Iv, and Iw of the phases that are calculated.

The zero-phase current 10 that is generated by the calculator 41a is input to the determiner 41b. A determination value D1 for the zero-phase current 10 is preset in the determiner 41b. When the zero-phase current 10 that is input is not less than the determination value D1, the determiner 41b outputs the gate-block signal GB. When the zero-phase current 10 that is input is less than the determination value D1, the determiner 41b is in a state of not outputting the gate-block signal GB.

When the power conversion device 10 of the embodiment is connected to a power system, favorably, the power conversion device 10 further includes a system fault determination circuit 47 (FIG. 3). In such a case, the alternating current circuit 1 is the power system, and the voltages and the currents of the phases of the alternating current circuit 1 are the system voltages and the system currents.

Detected values Vsu, Vsv, and Vsw of the system voltages and detected values Isu, Isv, and Isw of the system currents are input to the system fault determination circuit 47, and the system fault determination circuit 47 determines whether or not a fault has occurred in the power system. In the example, the levels of the system fault are set to two levels. The system fault determination circuit 47 outputs a fault detection signal I1 when the fault level is minor. A fault detection signal I2 is output when the fault level is severe. A minor fault level is, for example, when one phase of the power system has a ground short, and a severe fault level is, for example, when two phases of the power system have ground shorts.

The fault detection signal I1 is input to the abnormality detecting part 41 via an inverter circuit 48. When the signal that is input is active, and in the example, is the logical value "1", the abnormality detecting part 41 performs the abnormality detection of the arm current. When the signal that is input is inactive, and in the example, is the logical value "0", the abnormality detecting part 41 does not perform the abnormality detection operation of the arm current.

When the system fault determination circuit 47 detects a minor system fault and the fault detection signal I1 of the logical value "1" is output, the logic of the fault detection signal I1 is inverted by the inverter circuit 48, and the logical value "0" is input to the abnormality detecting part 41. Therefore, the abnormality detecting part 41 stops operating.

When the system fault determination circuit 47 detects a severe system fault and the fault detection signal I2 of the logical value "1" is output, the fault detection signal I2 is supplied to the gate signal generator 42 as the gate-block signal GB via the OR circuit 46. Therefore, the power converter 20 stops operating.

By including the system fault determination circuit 47, when the alternating current circuit 1 is a power system, etc., as described above, the power conversion device 10 can continue operating when a minor system fault occurs. When a severe system fault is detected, the power conversion device 10 can stop operating and standby until the recovery of the system. The reference of the determination of the system fault in the system fault determination circuit 47 is not limited to that described above and can be set arbitrarily as appropriate.

When a severe system fault is detected, the system fault determination circuit 47 sets the minor fault detection signal I1 to "1" and then sets the fault detection signal I2 to "1". Accordingly, the system fault determination circuit 47 stops the abnormality detection operation of the arm current by the abnormality detecting part 41 when a system fault of any level is detected. The logic circuit is not limited to that described above and may have another circuit setting that can perform a similar operation. For example, when the severe system fault is detected, the system fault determination circuit 47 may set the minor fault detection signal I1 to "0" and set the severe fault detection signal I2 to "1". However, in such a case, the inverter circuit 48 is replaced with a NOR circuit, and I1 and I2 are input to the substituted NOR circuit.

Thus, the operation of the abnormality detecting part 41 is stopped when a system fault is detected; thereby, the conditions when the gate-block signal GB was generated can remain as an accurate history, and higher efficiency of the maintenance inspection work, etc., becomes possible.

For example, the system fault determination circuit 47 is implemented in the control device 40. The system fault determination circuit 47 is not limited to being implemented in the control device 40, may be provided solitarily, or may be provided in another control panel.

In the control device 40, the configurations that include the system fault determination and/or the abnormality detection of the arm current described above may be realized by hardware, or all or a portion of these configurations may be realized by performing one or multiple steps of a program stored in a memory device (not illustrated). The control device 40 may include, for example, a semiconductor device such as a CPU (Central Processing Unit), an MPU (Micro-Processing Unit), or the like that is operated by a program, and steps of a program realizing the configurations described above may be performed by the CPU, etc. This is similar for other embodiments described below as well.

Effects of the power conversion device of the embodiment will now be described.

FIG. 5 is a schematic view for describing the currents flowing in the power converter.

FIG. 5 shows a simple circuit diagram including the arms of two phases, and in the example, the U-phase and the V-phase, of the phases of the power converter 20 which is a MMC.

As shown in FIG. 5, direct currents flow superimposed onto the alternating currents in the arms 22a to 22d of the power converter. The alternating currents are the alternating currents Iu and Iv of the phases input to and output from the power converter and are shown by the broken lines in the drawing. The direct currents are circulating currents Izu and Izv flowing through the power converter and are shown by the single dot-dash lines in the drawing.

The alternating current Iu of the U-phase is input from the connection part 21c and has current division uniformly between the upper and lower arms 22a and 22b. The circulating current Izu flows in the upper and lower arms 22a and 22b.

Accordingly, the arm currents Iup and Iun are represented as in the following Formula (1) and (2).

$$Iup = Iu/2 + Izu \qquad\qquad (1)$$

$$Iun = - Iu/2 + Izu \qquad\qquad (2)$$

The alternating current Iu of the U-phase is determined as in Formula (3) by calculating the difference between Formula (1) and Formula (2). The circulating current Izu of the U-phase is determined as in Formula (4) by summing Formula (1) and Formula (2) and multiplying by 1/2.

$$Iu = Iup - Iun \qquad\qquad (3)$$

$$Izu = (1/2){\times}(Iup + Iun) \qquad\qquad (4)$$

Similarly, the upper and lower arm currents Ivp and Ivn of the V-phase are represented as in the following Formula (5) and (6).

$$Ivp = Iv/2 + Izv \qquad\qquad (5)$$

$$Ivn = - Iv/2 + Izv \qquad\qquad (6)$$

The alternating current Iv of the V-phase is determined as in Formula (7) by calculating the difference between Formula (5) and Formula (6). The circulating current Izv of the V-phase is determined as in Formula (8) by summing Formula (3) and Formula (4) and multiplying by 1/2.

$$Iv = Ivp - Ivn \tag{7}$$

$$Izv = (1/2) \times (Ivp + Ivn) \tag{8}$$

This is similar for the W-phase as well. The alternating current Iw of the W-phase is determined as in Formula (9) by calculating the difference between the upper and lower arm currents Iwp and Iwn, and a circulating current Izw of the W-phase is determined as in Formula (10) by summing the upper and lower arm currents Iwp and Iwn and multiplying by 1/2.

$$Iw = Iwp - Iwn \tag{9}$$

$$Izw = (1/2) \times (Iwp + Ivn) \tag{10}$$

The sum of the circulating currents Izu, Izv, and Izw of the phases is the direct current flowing through the main line and the return line of the direct current circuit; therefore, the sum of the magnitudes of these currents is equal to the magnitude of the direct current Idc of the power converter input to and output from the connection parts 21a and 21b.

Thus, the alternating currents and the circulating currents of the phases can be determined by adding and subtracting the data of the upper and lower arm currents of the phases.

Accordingly, by controlling the upper and lower arm currents Iup to Iwn, the direct current Idc that is input to or output from the connection parts 21a and 21b can be controlled, and the alternating currents Iu to Iw that are input from or output to the connection parts 21c to 21e can be controlled. Thus, in the MMC, various controls are performed based on the arm currents Iup to Iwn.

An overcurrent protection function is provided in the power conversion device 10. When an excessive current flows in one of the arms due to a failure of the unit converter 24, etc., it is necessary to block all of the gate signals Vg1 to Vg/V by the gate-block signal GB and appropriately stop the power converter 20.

Thus, the arm currents are used as basic data for controlling the input and output currents of the power conversion device 10 and provide information for the overcurrent protection of the power conversion device 10. Accordingly, it is necessary for the current detectors 23a to 23f that detect the arm currents Iup to Iwn to output the correct data.

The control device 40 that includes the abnormality detecting part 41 is included in the power conversion device 10 of the embodiment. The abnormality detecting part 41 calculates the zero-phase current I0 based on the arm currents Iup to Iwn detected by all of the current detectors 23a to 23f.

The zero-phase current I0 has an extremely large value for abnormal data of even one of the alternating currents Iu, Iv, and Iw of the phases. If one of the current detectors 23a to 23f has a failure and does not output the accurate current data, one of the alternating currents Iu, Iv, and Iw will have abnormal data. It is considered that the current detector outputs data having an amplitude of 0 to a value near 0 when abnormal. The abnormality of the current detectors 23a to 23f is, for example, an open failure due to severed wiring, etc.

The determination value D1 is preset in the abnormality detecting part 41. The determination value D1 is compared to the amplitude of the zero-phase current I0 that is calculated. The determination value D1 is set to a value such that the zero-phase current I0 can be detected when an abnormality occurs in one of the alternating currents Iu to Iw. For example, a value that is sufficiently greater than the zero-phase current when an imbalance occurs in the three-phase alternating current is set.

The abnormality detecting part 41 generates the gate-block signal GB when the amplitude of the zero - phase current I0 is not less than the determination value D1.

Due to the gate-block signal GB, the control device 40 sets and maintains all of the gate signals Vg1 to Vg*N* in the OFF-state. The power converter 20 can be safely stopped thereby.

A method is known in which current detection and/or overcurrent protection are performed by a single current detector (e.g., Patent Literature 1). In this method, other than the detection of the current by the current detector, the fluctuation of the voltage of the direct current side of the inverter and/or the heat generation of the switching element are detected simultaneously. Even when the output of the current detector is 0, the inverter is determined to be operating when the direct current voltage input to the inverter fluctuates or the heat generation of the switching element is confirmed.

Therefore, the failure of the current detector can be determined due to the output of the current detector being 0 regardless of whether the inverter is operating.

According to this method, the data that is output from sensors used for the normal operation, etc., can be utilized for the measurement of the direct current voltage input to the inverter and/or the temperature detection of the switching element. Therefore, the failure of the current detector can be determined by adding and/or modifying a program without adding a component.

If the known method described above is applied to a MMC, it is necessary to measure and perform software processing of the capacitor voltages and the switching element temperatures of many unit converters 24. As described above, the power converter 20 which is a MMC includes many unit converters 24 having cascade connections in one arm, and includes six arms. Therefore, it is not realistic to perform the abnormality detection for each current detector because the amount of processing of the software would be enormous.

FIG. 6 is a block diagram illustrating a power conversion device of a comparative example.

As shown in FIG. 6, the power converter includes multiple current detectors 123-1, 123-2, 123-3, and 123-4 (123-1 to 123-4) corresponding to one arm. A control device 140 includes a failure determiner 141; the detection data of the multiple current detectors 123-1 to 123-4 included in the one arm is input to the failure determiner 141; and the failure determiner 141 detects abnormal data.

In the example, the peak value and/or the effective value of the amplitude for arm currents Iup1, Iup2, Iup3, and Iup4 (Iup1 to Iup4) of all of the current detectors 123-1 to 123-4 are input to the failure determiner 141 that corresponds to the arm of the U-phase upper side, and the failure determiner 141 selects the median value of the peak values and/or the effective values. The failure determiner 141 determines the existence or absence of an abnormality of the data of the arm currents Iup1 to Iup4 from whether or not the peak value and/or the effective value of the amplitude is within a preset deviation from the selected median value for the arm currents Iup1 to Iup4. Instead of the median value, there are also cases where the average value of the peak value and/or the effective value of the amplitude of the arm current is calculated and used as the determination value, etc.

Thus, in the power conversion device of the comparative example, the failure of the current detector can be determined by providing redundancy of the current detector. However, when using the median value as described above to determine the failure of the current detector, it is necessary to provide three or more current detectors, and more current detectors are necessary to accurately perform the failure detection. Thus, by providing multiple current detectors in the arm, the increase of the number of components and/or the arrangement space becomes pronounced. Therefore, in the power conversion device of the comparative example, there is a risk of an increase of the cost, a larger size of the device, etc.

In the power conversion device of the embodiment as described above, the control device 40 includes the abnormality detecting part 41; thereby, the abnormality of the current detector can be detected without providing redundancy of the current detector and without monitoring parameters other than the current for each unit converter.

(Second embodiment)

Although the existence or absence of the abnormality of the current detector is determined in the embodiment described above by calculating the zero-phase current of the alternating currents, the abnormality of the current detector may be determined by calculating another element. In the embodiment, the arm current is monitored and the abnormality of the current detector is determined by extracting the alternating current component of the circulating current flowing through the power converter.

FIG. 7 is a block diagram illustrating a portion of the power conversion device according to the embodiment.

As shown in FIG. 7, the control device includes an abnormality detecting part 241. The abnormality detecting part 241 includes a calculator 241a, high-pass filters 241b, and determiners 241c.

The calculator 241a includes adders 241a1 to 241a3. The calculator 241a adds the arm currents Iup and Iun by using the adder 241a1. The adder 24a1 outputs 2 times the circulating current Izu of the U-phase. The calculator 241a adds the arm currents Ivp and Ivn by using the adder 241a2. The adder 24a2 outputs 2 times the circulating current Izv of the V-phase. The calculator 241a adds the arm currents Iwp and Iwn by using the adder 241a3. The adder 24a3 outputs 2 times the circulating current Izw of the W-phase.

The data of the circulating currents Izu, Izv, and Izw of the phases that is calculated is input respectively to the high-pass filters 241b. The high-pass filters 241b remove the direct current components from the circulating currents, and output the data of the alternating current components.

The data of the alternating current components of the circulating currents of the phases output from the high-pass filters 241b is input to the determiners 241c. The determiners 241c include a preset determination value D2. The determination value D2 is set to a value that is sufficiently large to be able to determine that the alternating current component of the circulating current is abnormal.

If an abnormality occurs in the current detector of one of the upper and lower arms and the data of the arm current output by the current detector is about 0, the alternating current component of the current without the abnormality remains in the circulating current calculated by the calculator 241a. When the direct current component is removed by the high-pass filter 241b, the data of a large amplitude value of the alternating current component is extracted; therefore, it is determined that there is an abnormality in the current detector.

(Third embodiment)

FIG. 8 is a block diagram illustrating a portion of the power conversion device of the embodiment.

In the embodiment, the alternating currents are calculated using the arm currents, and the direct current components of the alternating currents that are calculated are extracted; thereby, the arm currents are monitored, and abnormalities of the current detectors are determined.

As shown in FIG. 8, the control device includes an abnormality detecting part 341. The abnormality detecting part 341 includes a calculator 341a, low-pass filters 341b, and determiners 341c.

The calculator 341a includes adder-subtracters 341a1 to 341a3. The difference between the arm currents Iup and Iun of the U-phase is calculated by the adder-subtracter 341a1. The adder-subtracter 341a outputs the data of the alternating current Iu of the U-phase that is calculated. The difference between the arm currents Ivp and Ivn of the V-phase is calculated by the adder-subtracter 341a2. The adder-subtracter 341a2 outputs the data of the alternating current Iv of the V-phase that is calculated. The difference between the arm currents Iwp and Iwn of the W-phase is calculated by the adder-subtracter 341a3. The adder-subtracter 341a3 outputs the data of the alternating current Iw of the W-phase that is calculated.

The data of the alternating currents Iu, Iv, and Iw of the phases that is calculated is input respectively to the low-pass filters 341b. The low-pass filters 341b extract and output the direct current components by removing the alternating current components from the alternating currents. The extraction of the direct current components by removing the fundamental frequency components from the alternating currents is not limited to a low-pass filter, and another filter may be used. For example, a solitary or combined multiple band-elimination filters may be used.

The determiners 341c include a preset determination value D3. The determination value D3 is set to a value such that, when there is an abnormality in one of upper and lower arm currents and one output is substantially 0, the directs current component when the difference between the outputs is calculated can be detected. The determiners 341c compare the magnitudes of the direct current components of the alternating currents to the determination value D3.

The determiners 341c output the gate-block signal GB when the direct current components of the alternating currents are not less than the determination value D3.

In the first to third embodiments, the abnormality of the current detector is determined by calculating the zero-phase current, the circulating current, or the alternating current based on the arm current. The calculation of the circulating current and/or the alternating current is performed for the normal control operation; therefore, the control function or the program steps for the calculation already is implemented in the control device. Accordingly, it is unnecessary to add a new component for the abnormality detection of the current detector; moreover, the modification and/or the addition to the program can be reduced to a small-scale modification and/or addition.

(Fourth embodiment)

FIG. 9 is a block diagram illustrating a direct current power transmission system of the embodiment.

As shown in FIG. 9, the direct current power transmission system 400 includes power conversion devices 10a and 10b. In the example, the power conversion device 10a is connected to a power system 1a via a transformer 2a. In the example, the power conversion device 10b is connected to a power system 1b via a transformer 2b. The power conversion devices 10a and 10b are connected by the direct current circuit 3. The direct current circuit 3 is, for example, a direct current power line and includes a main line and a return line.

The power conversion devices 10a and 10b can be the power conversion device of one of the other embodiments described above.

The direct current circuit 3 may be a direct current power line for long-distance direct current power transmission; however, the direct current circuit 3 may be a direct current power line in the same power substation. In such a case, the direct current systems 1a and 1b are the same system, and the direct current power transmission system 400 is a so-called BTB (Back To Back) system.

In the case of the embodiment, by using the power conversion device of the other embodiments described above in the direct current power transmission system 400, it is possible to construct a safe system in which the abnormalities of the current detectors can be detected easily.

Hereinabove, embodiments of the invention are described with reference to specific examples. However, the invention is not limited to these specific examples. For example, one skilled in the art may similarly practice the invention by appropriately selecting specific configurations of components such as the power converter, the control device, etc.,

from known art, and such practice is within the scope of the invention to the extent that similar effects can be obtained.

Also, combinations of any two or more components of the specific examples within the extent of technical feasibility also are within the scope of the invention to the extent that the spirit of the invention is included.

Furthermore, all of the power conversion devices practicable by an appropriate design modification by one skilled in the art based on the power conversion devices described above as embodiments of the invention also are within the scope of the invention to the extent that the spirit of the invention is included.

Furthermore, various modifications and alterations within the spirit of the invention will be readily apparent to those skilled in the art, and all such modifications and alterations should be seen as being within the scope of the invention.

Although several embodiments of the invention are described, these embodiments are presented as examples and are not intended to limit the scope of the invention. These novel embodiments may be implemented in other various forms, and various omissions, substitutions, and modifications can be performed without departing from the spirit of the invention. Such embodiments and their modifications are within the scope and spirit of the invention and are within the scope of the invention described in the claims and their equivalents.

**Claims**

1. A power conversion device, comprising:

a power converter including

a first connection part connectable to a high potential side of a direct current circuit,
a second connection part connectable to a low potential side of the direct current circuit,
a third connection part connectable to a first phase of an alternating current circuit,
a fourth connection part connectable to a second phase of the alternating current circuit,
a fifth connection part connectable to a third phase of the alternating current circuit,
a first arm connected between the first connection part and the third connection part, the first arm including a unit converter having a cascade connection,
a second arm connected between the third connection part and the second connection part, the second arm including a unit converter having a cascade connection,
a third arm connected between the first connection part and the fourth connection part, the third arm including a unit converter having a cascade connection,
a fourth arm connected between the fourth connection part and the second connection part, the fourth arm including a unit converter having a cascade connection,
a fifth arm connected between the first connection part and the fifth connection part, the fifth arm including a unit converter having a cascade connection,
a sixth arm connected between the fifth connection part and the second connection part, the sixth arm including a unit converter having a cascade connection,
a single first current detector provided in the first arm, the first current detector detecting a first current flowing in the first arm,
a single second current detector provided in the second arm, the second current detector detecting a second current flowing in the second arm,
a single third current detector provided in the third arm, the third current detector detecting a third current flowing in the third arm,
a single fourth current detector provided in the fourth arm, the fourth current detector detecting a fourth current flowing in the fourth arm,
a single fifth current detector provided in the fifth arm, the fifth current detector detecting a fifth current flowing in the fifth arm, and
a single sixth current detector provided in the sixth arm, the sixth current detector detecting a sixth current flowing in the sixth arm; and

a control device including an abnormality detecting part detecting an existence of an abnormality in one of the first to sixth current detectors based on the first to sixth currents.

2. The power conversion device according to claim 1, wherein based on the first to sixth currents, the abnormality detecting part calculates a zero - phase current of alternating currents flowing in the phases of the alternating current circuit and determines that an abnormality exists in one of the first to sixth current detectors when the zero-phase current is not less than a first determination value, the first determination value being prescribed.

**3.** The power conversion device according to claim 1, wherein the abnormality detecting part extracts alternating current components from circulating currents of the phases calculated based on the first to sixth currents and determines that an abnormality exists in one of the first to sixth current detectors when the alternating current component is not less than a second determination value, the second determination value being prescribed.

**4.** The power conversion device according to claim 1, wherein the abnormality detecting part extracts direct current components of alternating currents flowing in the phases of the alternating current circuit calculated based on the first to sixth currents and determines that an abnormality exists in one of the first to sixth current detectors when the direct current component is not less than a third determination value, the third determination value being prescribed.

**5.** The power conversion device according to claim 1, wherein the abnormality detecting part identifies, based on the first to sixth currents, whether or not an abnormality exists in one of the first to sixth current detectors.

**6.** The power conversion device according to claim 1, further comprising a fault determination function of causing the power converter to continue an operation when a fault occurs in a power system included in the alternating current circuit even when the abnormality detecting part detects an abnormality in one of the first to sixth current detectors.

FIG. 1

FIG. 2

FIG. 3

23a ⸺ [ ] $I_{up}$ + 41a1 $I_u$ + 41a4 + 41a5 $I_0$ 41b ⟶ GB

23b ⸺ [ ] $I_{un}$ −

23c ⸺ [ ] $I_{vp}$ + 41a2 $I_v$ −

23d ⸺ [ ] $I_{vn}$

23e ⸺ [ ] $I_{wp}$ + 41a3 $I_w$ −

23f ⸺ [ ] $I_{wn}$

41a 41

D1

# FIG. 4

EP 3 780 373 A1

FIG. 5

FIG. 6

FIG. 7

FIG. 8

FIG. 9

## INTERNATIONAL SEARCH REPORT

International application No.

PCT/JP2018/012705

A. CLASSIFICATION OF SUBJECT MATTER
Int. Cl. H02M7/48(2007.01)i, H02M7/12(2006.01)i, H02M7/49(2007.01)i

According to International Patent Classification (IPC) or to both national classification and IPC

B. FIELDS SEARCHED

Minimum documentation searched (classification system followed by classification symbols)
Int. Cl. H02M7/48, H02M7/12, H02M7/49

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2016-214083 A (HITACHI, LTD.) 15 December 2016, | 1, 5 |
| A | paragraphs [0016]-[0032], fig. 1 (Family: none) | 2-4, 6 |
| Y | JP 2017-103919 A (TOSHIBA MITSUBISHI-ELECTRIC INDUSTRIAL SYSTEMS CORP.) 08 June 2017, paragraphs [0002]-[0004] (Family: none) | 1, 5 |
| A | JP 2016-208743 A (TOSHIBA CORP.) 08 December 2016, entire text, all drawings & WO 2016/170869 A1 | 1-6 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>09.05.2018 | Date of mailing of the international search report<br>22.05.2018 |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001157460 A